Europäisches Patentamt

European Patent Office

Office européen des brevets

(19)

(11) Numéro de publication: **0 276 611**
**B1**

(12) # FASCICULE DE BREVET EUROPEEN

(45) Date de publication du fascicule du brevet:
23.05.90

(51) Int. Cl.⁵: **F16D 65/52**

(21) Numéro de dépôt: 87402966.3

(22) Date de dépôt: 23.12.87

(54) Frein à tambour à réglage automatique.

(30) Priorité: 29.01.87 FR 8701045

(43) Date de publication de la demande:
03.08.88 Bulletin 88/31

(45) Mention de la délivrance du brevet:
23.05.90 Bulletin 90/21

(84) Etats contractants désignés:
DE ES GB IT

(56) Documents cités:
FR-A- 1 419 377
FR-A- 2 285 545
GB-A- 549 914
GB-A- 1 507 550

(73) Titulaire: BENDIX France, 126, rue de Stalingrad,
F-93700 Drancy(FR)

(72) Inventeur: Charbonnier, Jacques, 37, rue de l'Alsace,
F-92110 Clichy(FR)

(74) Mandataire: Timoney, Ian Charles Craig et al, BENDIX
FRANCE Division Technique Service Brevets Bendix
Europe 126, rue de Stalingrad, F-93700 Drancy(FR)

## Description

L'invention concerne un frein à tambour équipé d'un dispositif de réglage automatique prenant en compte l'usure des éléments de friction du frein afin que la course du moteur de frein reste pratiquement inchangée malgré cette usure. Un tel frein peut être utilisé indifféremment sur un véhicule de tourisme ou sur un poids lourd.

De façon plus précise, l'invention concerne un frein à tambour tel que celui qui est décrit dans le document FR-A-1 419 377. Ce frein à tambour comporte une plaque support sur laquelle sont montés coulissants deux segments comprenant des éléments de friction. Ces éléments sont susceptibles d'être amenés en engagement de friction contre un tambour tournant par un moteur de frein interposé entre deux extrémités adjacentes des segments. Un levier de réglage est articulé par l'une de ses extrémités sur un premier des segments, à proximité du moteur de frein, et comporte à son extrémité opposée un secteur denté. Un cliquet monté sur ce même segment est engrené sur le secteur denté formé à l'extrémité du levier de réglage sous l'action d'un ressort de torsion.

Le frein à tambour décrit dans le document FR-A-1 419 377 comprend de plus une entretoise interposée entre les segments à proximité du moteur de frein et un ressort sollicitant les extrémités des segments vers l'entretoise, de façon à amener le levier de réglage en appui sur cette dernière lorsque le moteur de frein n'est pas actionné. On définit ainsi une distance d'écartement au repos entre les extrémités précitées des segments. La coopération du cliquet avec le secteur denté formé à l'extrémité du levier de réglage est telle que seule une rotation de ce dernier dans le sens tendant à accroître cette distance d'écartement au repos est autorisée. Afin de commander cette rotation du levier de réglage lorsque l'usure des éléments de friction rend nécessaire une augmentation de cette distance d'écartement au repos, l'entretoise et le levier de réglage portent deux surfaces en vis-à-vis séparées par un espace définissant entre elles un certain jeu lorsque le moteur de frein n'est pas actionné, ces surfaces étant disposées de façon à pouvoir venir en appui pour commander la rotation du levier de réglage lorsque le moteur est actionné.

Dans un frein de ce type, la distance séparant les extrémités des segments entre lesquelles est placé le moteur de frein lorsque ce dernier n'est pas actionné est augmentée automatiquement lorsque la course d'actionnement du moteur de frein nécessaire à l'application des éléments de friction contre le tambour dépasse une certaine valeur. Une compensation automatique de l'usure des éléments de friction est ainsi obtenue.

Cependant, en l'absence de dispositions particulières, l'écartement séparant au repos les extrémités des segments entre lesquelles est placé le moteur de frein est aussi augmenté automatiquement lorsque l'accroissement de la course d'actionnement du moteur de frein résulte d'un échauffement important. En effet, la dilatation du tambour est alors telle que l'augmentation de la course d'actionnement du moteur de frein entraîne un pivotement du levier de réglage. Il en résulte un écartement intempestif des segments risquant de conduire à un blocage du frein lorsque la température de celui-ci redevient normale.

Pour remédier à cet inconvénient il a été proposé dans le document FR-A 2 285 545, d'associer au levier de réglage un élément sensible à la température, qui interdit le pivotement du levier de réglage au moyen d'un levier denté engageant celui-ci, quand la température ambiante dépasse une valeur déterminée. Cependant, ce dispositif connu est d'une construction relativement compliquée.

L'invention a donc pour objet un frein à tambour du type défini précédemment, ce frein étant équipé de moyens simples permettant d'éviter qu'un échauffement n'entraîne un accroissement de la distance séparant au repos les extrémités des segments entre lesquelles est placé le moteur de frein.

Conformément à l'invention, ce résultat est obtenu grâce à un frein à tambour à réglage automatique comportant une plaque support sur laquelle sont montés coulissants deux segments comprenant des éléments de friction susceptibles d'être amenés en engagement de friction contre un tambour tournant par un moteur de frein interposé entre deux extrémités adjacentes des segments, un levier de réglage dont une extrémité est articulée sur ladite extrémité d'un premier des segments, une entretoise interposée entre les segments à proximité du moteur de frein, un moyen élastique sollicitant les extrémités des segments vers l'entretoise, de façon à amener le levier de réglage en appui sur cette dernière lorsque le moteur de frein n'est pas actionné, pour définir une distance d'écartement au repos entre lesdites extrémités des segments, un moyen d'embrayage unidirectionnel monté sur le premier segment et en prise avec l'autre extrémité du levier de réglage, de façon à autoriser seulement une rotation de ce dernier dans un sens tendant à accroître cette distance d'écartement au repos, l'entretoise et le levier de réglage portant deux surfaces en vis-à-vis séparées par un espace définissant un jeu fonctionnel lorsque le moteur de frein n'est pas actionné, ces surfaces étant disposées de façon à pouvoir venir en appui l'une sur l'autre pour commander la rotation du levier de réglage dans ledit sens lorsque le moteur est actionné, caractérisé en ce qu'une cale mobile portée par un organe sensible à la température est placée dans ledit espace pour donner au jeu fonctionnel une valeur réduite lorsque la température est inférieure à un seuil de température donné, ledit organe sensible à la température déplaçant la cale mobile hors dudit espace lorsque la température est supérieure à ce seuil, pour donner au jeu fonctionnel une valeur maximum.

Dans le frein à tambour perfectionné ainsi défini, la valeur réduite du jeu existant entre les surfaces en vis-à-vis de l'entretoise et du levier de réglage lorsque la température est inférieure à un certain seuil permet d'assurer le réglage automatique du frein lorsque l'usure des éléments de friction l'exige. En revanche, la valeur plus importante donnée à ce jeu pour des températures supérieures au seuil précité permet d'éviter qu'un réglage intempestif n'intervienne à la suite d'un échauffement du frein.

De préférence, l'organe sensible à la température est un bilame, ce bilame pouvant notamment être fixé sur l'entretoise par une première extrémité et porter la cale à son autre extrémité.

Selon un premier mode de réalisation de l'invention, la cale mobile a une épaisseur uniforme, de sorte que la valeur réduite du jeu est constante lorsque cette cale est placée dans l'espace formé entre les surfaces en vis-à-vis de l'entretoise et du levier.

Au contraire, selon un autre mode de réalisation de l'invention, la cale mobile a une épaisseur variable, de sorte que la valeur réduite du jeu augmente avec la température lorsque cette cale est placée dans ledit espace.

Dans ce dernier mode de réalisation de l'invention, l'épaisseur de la cale mobile peut notamment être définie entre deux faces planes sécantes, de sorte que la valeur réduite du jeu augmente progressivement avec la température, lorsque celle-ci est inférieure audit seuil.

Différents modes de réalisation de l'invention vont maintenant être décrits, à titre d'exemple nullement limitatif, en se référant aux dessins annexés dans lesquels :

- la figure 1 est une vue en plan d'un frein à tambour selon l'invention,
- la figure 2 est une vue en plan, représentant à plus grande échelle et en coupe partielle la coopération de l'entretoise avec le levier de réglage,
- la figure 3 est une vue en coupe selon la ligne III-III de la figure 2 ; et
- la figure 4 est une vue comparable à la figure 2 illustrant un autre mode de réalisation du frein selon l'invention.

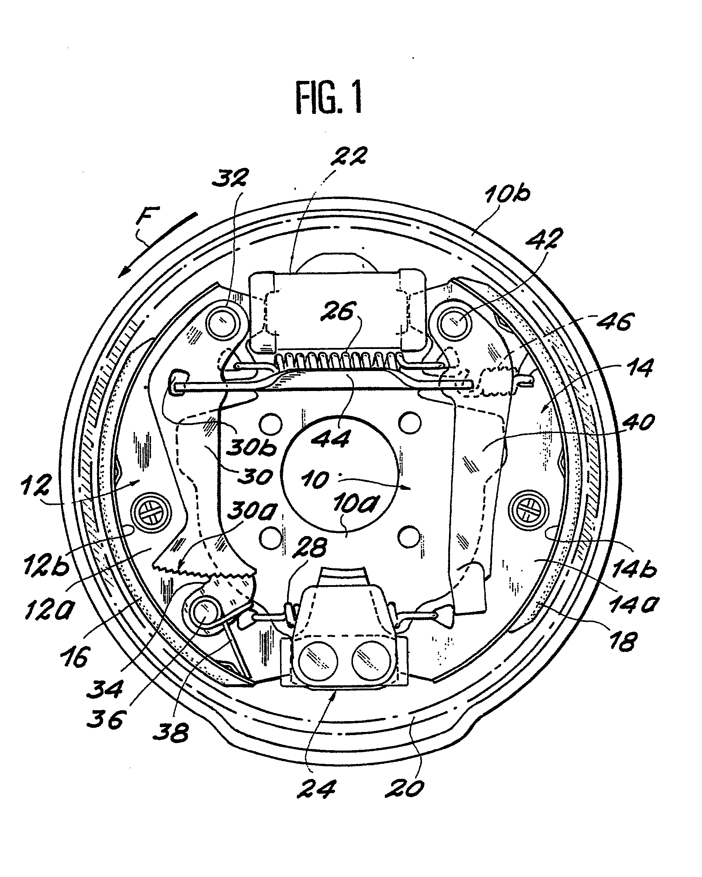

Le frein à tambour représenté sur la figure 1 comporte une plaque support 10 constituée d'un disque 10a approximativement plan, prolongé à sa périphérie par une couronne circulaire 10b. Cette plaque 10 est prévue pour être assujettie à une partie fixe du véhicule telle qu'une bride d'essieu.

Deux segments de freins 12 et 14 sont supportés de façon coulissante par le disque 10a de la plaque support, grâce à des mécanismes habituels (non représentés). De façon bien connue, chacun des segments 12 et 14 comprend une âme 12a, 14a approximativement plane sur laquelle est fixée une jante 12b, 14b en forme d'arc de cercle supportant sur sa face extérieure une garniture de friction 16 et 18 respectivement.

Les segments 12 et 14 sont placés sur la plaque support 10 de telle sorte que les enveloppes extérieures des garnitures 16 et 18 soient situées sur un même cercle dont l'axe est confondu avec l'axe de la plaque support 10. Ainsi, les garnitures 16 et 18 peuvent venir en contact avec la surface intérieure d'un tambour de frein 20 coiffant les deux segments et représenté en traits mixtes sur la figure 1. Le tambour 20 est monté concentriquement à l'intérieur de la couronne 10b et il est fixé à une partie tournante telle qu'une roue du véhicule.

Un moteur de frein 22, à commande hydraulique, est fixé sur le disque 10a de la plaque support, entre deux premières extrémités adjacentes des segments 12 et 14. Ce moteur de frein 22 est muni de deux pistons (non représentés) fonctionnant en opposition de façon à exercer une poussée sur l'extrémité correspondante de l'âme 12a, 14a de chacun des segments, lorsque le moteur est actionné.

Un bloc d'ancrage 24, également fixé sur le disque 10a de la plaque support est placé entre les deux autres extrémités adjacentes des segments 12 et 14, de telle sorte que les extrémités correspondantes des âmes 12a et 14a de ces segments soient normalement en appui contre ce bloc.

Un ressort de traction 26 est interposé entre les extrémités des âmes des segments entre lesquelles est placé le moteur de frein 22, à proximité immédiate de ce dernier, pour rapprocher ces extrémités l'une de l'autre lorsque le moteur n'est pas actionné. De façon comparable, le maintien des deux autres extrémités des segments 12 et 14 en appui contre le bloc d'ancrage 24 est réalisé au moyen d'un ressort de traction 28 interposé entre les extrémités correspondantes des âmes des segments, à proximité immédiate de ce bloc.

En supposant que le tambour de frein 20 tourne dans le sens de la flèche F sur la figure 1 lorsque le véhicule se déplace en marche avant, les segments 12 et 14 peuvent être distingués par le fait que le segment 12 prend appui sur le bloc d'ancrage 24 lorsqu'il est en contact de friction avec le tambour, alors que le segment 14 prend appui sur le moteur de frein 22 dans les mêmes conditions. Pour tenir compte de cette différence, les segments 12 et 14 sont appelés respectivement "segment avant" et "segment arrière".

L'une des extrémités d'un levier de réglage 30 est montée de façon pivotante par un axe 32 sur l'extrémité de l'âme du segment avant 12 qui est en appui sur le moteur de frein 22. L'extrémité opposée du levier de réglage 30 porte un secteur denté 30a centré sur l'axe de pivotement 32.

Un cliquet 34 est également monté de façon pivotante par un axe 36 sur l'âme du segment avant 12, en regard du secteur denté 30a. Un ressort de torsion 38, monté sur l'axe 36, applique les dents du cliquet 34 contre les dents du secteur denté 30a. La coopération entre le cliquet 34 et le secteur denté 30a est telle qu'il est possible de faire pivoter le levier de réglage 30 autour de son axe 32 dans le sens inverse des aiguilles d'une montre en considérant la figure 1, alors qu'un pivotement en sens inverse du levier 30 est impossible.

Dans l'exemple de réalisation représenté sur la figure 1, un levier de frein à main 40 est monté de façon pivotante par l'une de ses extrémités sur l'extrémité de l'âme du segment arrière 14 adjacente au moteur de frein 22, par l'intermédiaire d'un axe 42.

De façon connue, l'autre extrémité du levier de frein à main 40 est prévue pour être fixée à l'extrémité d'un câble de commande manuelle (non représenté).

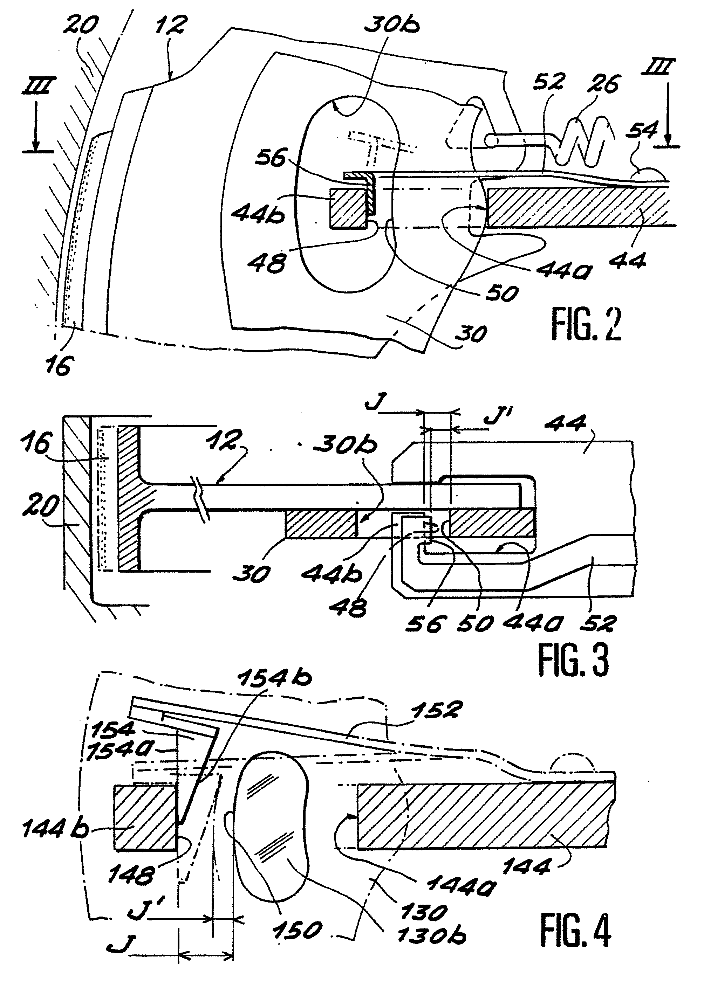

Le frein à tambour représenté sur la figure 1 comprend de plus une entretoise 44 disposée entre les segments 12 et 14, au voisinage du moteur de frein 22, approximativement parallèlement à l'axe de ce dernier. Cette entretoise 44 est constituée par une plaque présentant deux échancrures à ses extrémités. L'âme du segment avant 12 et le levier de réglage 30 viennent se loger dans l'une 44a de ces échancrures (figures 2 et 3), alors que l'âme du segment arrière 14 et le levier de frein à main 40 viennent se loger dans l'autre échancrure. Des décrochements formés au niveau de l'entretoise 44 sur le bord intérieur de chacun des segments 12 et 14 permettent de maintenir en place l'entretoise.

L'entretoise 44 définit l'écartement minimum séparant les extrémités des segments entre lesquelles est placé le moteur de frein 22, lorsque ce dernier est relâché. En effet, le ressort 26 maintient le levier de réglage 30 et le levier de frein à main 40 dans le fond des échancrures formées aux extrémités de l'entretoise 44, lorsque le moteur de frein 22 n'est pas actionné. A cet effet, les bords intérieurs des leviers 30 et 40 sont toujours en saillie par rapport aux bords intérieurs des âmes 12a et 14a des segments qui les supportent, au niveau de la biellette 44.

Un pivotement du levier de réglage 30 dans le sens inverse des aiguilles d'une montre (figure 1) tend donc à accroître la distance séparant au repos les extrémités des segments entre lesquelles est placé le moteur 22. En commandant un tel pivotement lorsque l'usure des garnitures 16 et 18 l'exige, on compense donc automatiquement cette usure.

La commande du pivotement du levier 30 lorsque le moteur de frein 22 est actionné et lorsqu'un réglage du frein est nécessaire est effectuée par l'entretoise 44. A cet effet, un ressort de traction 46 est interposé entre la jante 14b du segment arrière et l'extrémité de l'entretoise 40 adjacente à ce segment, de sorte que l'entretoise se déplace avec le segment arrière 14 lorsque le moteur de frein 22 est actionné. Un déplacement relatif se produit alors entre l'extrémité opposée de l'entretoise 44 et le levier de réglage 30 porté par le segment avant 12.

Comme l'illustrent plus précisément les figures 2 et 3, ce déplacement a pour effet de rapprocher deux surfaces en vis-à-vis 48 et 50 formées respectivement sur l'entretoise 44 et sur le levier de réglage 30. Lorsque le moteur de frein 22 n'est pas actionné, ces deux surfaces sont normalement séparées par un jeu fonctionnel J déterminant la course d'actionnement du moteur 22 pour laquelle aucun réglage du frein n'est requis. Pour faciliter la compréhension, ce jeu J a été volontairement exagéré sur les figures 2 et 3.

Dans l'exemple représenté sur ces figures, la surface 48 est formée sur un ergot 44b faisant saillie vers l'intérieur de l'échancrure 44a formée à l'extrémité correspondante de l'entretoise 44. Cet ergot 44b pénètre dans une lumière 30b formée dans le levier 30 et dont le bord le plus proche de l'intérieur du frein définit la surface 50.

Lorsque le jeu J formé au repos entre les surfaces en vis-à-vis 48 et 50 est rattrapé lors de la mise en oeuvre du moteur de frein 22, la surface 48 de l'entretoise vient en appui sur la surface 50 du levier de réglage. Si l'écartement existant à ce moment entre les extrémités des segments 12 et 14 actionnés par le moteur de frein 22 n'est pas suffisant pour appliquer efficacement les garnitures 16 et 18 contre le tambour tournant 20, la course du moteur de frein 22 se poursuit, ce qui a pour effet de faire pivoter le levier de réglage 30 dans le sens inverse des aiguilles d'une montre en considérant la figure 1. Lorsque ce pivotement permet au cliquet 34 de progresser d'une dent sur le secteur denté 30a, l'écartement existant au repos entre les extrémités des segments adjacentes au moteur de frein 22 se trouve augmenté.

Conformément à l'invention, des moyens sont prévus pour que le jeu existant au repos entre les surfaces en vis-à-vis de l'entretoise 44 et du levier de réglage 30 soit plus important lorsque la température est élevée que lorsque la température est proche de l'ambiante. Une augmentation intempestive de la distance séparant au repos les extrémités des segments entre lesquelles se trouve le moteur de frein 22 résultant d'une dilatation du tambour de frein est ainsi évitée.

Dans le mode de réalisation représenté sur les figures 2 et 3, ces moyens comprennent un bilame 52 dont une extrémité est fixée sur l'entretoise 44, à proximité de son extrémité adjacente au segment avant 12, par exemple au moyen de rivets 54. L'extrémité opposée du bilame 52 porte une cale 56 d'épaisseur nettement inférieur au jeu J, disposée de façon à venir se placer dans l'espace formé entre les surfaces 48 et 50, contre la surface 48, lorsque le bilame 52 est approximativement plan. Dans ce mode de réalisation, l'épaisseur de la cale 56 est uniforme, de telle sorte que le jeu J existant initialement entre les surfaces 48 et 50 est transformé en un jeu réduit J'. A titre d'exemple nullement limitatif, les jeux J et J' peuvent être respectivement d'environ 4 mm et 2,5 mm.

A température ambiante, le bilame 52 est approximativement plan (trait plein sur la figure 2). La déformation progressive du bilame 52 sous l'effet d'un accroissement de la température conduit à effacer totalement la cale 56 d'entre les surfaces 48 et 50 pour un seuil de température bien défini (traits mixtes sur la figure 2). A titre d'exemple nullement limitatif, ce seuil peut être voisin de 250°C.

Le jeu J' est calculé de façon à déterminer la course d'actionnement du frein au-delà de laquelle un réglage de la distance séparant les extrémités des segments sur lesquelles agit le moteur 22 est nécessaire, dans des conditions normales de température.

Au contraire, le jeu J est déterminé afin qu'un réglage du frein n'intervienne à haute température que lorsque l'écartement des extrémités des segments adjacentes au moteur de frein révèle une usure des garnitures superposée à la dilatation du tambour. Un réglage intempestif dû à l'échauffement est ainsi évité.

Dans le mode de réalisation représenté sur la figure 4, les éléments correspondant à ceux qui ont été décrits précédemment en se référant aux figures 1 à 3 sont désignés par les mêmes numéros de référence augmentés de 100. Ce mode de réalisation diffère notamment du précédent par le fait que la cale 154 fixée à l'extrémité du bilame 152 a une épaisseur variable.

Plus précisément, cette cale 154 présente une section approximativement triangulaire définie entre deux faces planes sécantes 154a et 154b. Comme l'illustre la figure 4 (traits mixtes) à température ambiante ou peu élevée, le bilame 152 n'est pratiquement pas déformé. La face 154a de la cale est alors adjacente à la surface 148 formée sur l'entretoise, alors que la face 154b de la cale, qui se trouve en vis-à-vis de la surface 150 formée sur le levier de réglage, est inclinée par rapport à cette dernière.

De cette manière, au fur et à mesure que le bilame 152 se déforme sous l'effet de l'augmentation de température (trait plein sur la figure 4) le jeu J' formé entre la surface 150 et la cale 154 augmente régulièrement avec la température. En choisissant le bilame de façon judicieuse et en donnant à la section de la cale 154 une forme appropriée, on peut ainsi accroître progressivement le jeu de fonctionnement du frein au-delà duquel un réglage automatique de celui-ci est effectué, au fur et à mesure que la température augmente, pour compenser l'augmentation de diamètre du tambour 20 qui en résulte. Comme précédemment, la cale 154 s'efface totalement d'entre les surfaces 148 et 150 pour un seuil de température donné.

Dans un autre mode de réalisation non représenté, la languette portée par le bilame peut avoir une épaisseur variant en escalier, afin que le jeu de fonctionnement du frein augmente par paliers avec la température.

Le mode de réalisation de la figure 4 illustre également une variante de réalisation des surfaces 148 et 150 formées sur l'entretoise 144 et sur le levier de réglage 130. Plus précisément, la surface 150 est formée sur une partie en saillie 130b du levier de réglage 130, sur le bord de cette partie en saillie le plus proche du tambour de frein. La surface en vis-à-vis 148 formée sur l'entretoise 144 est réalisée quant à elle sur un doigt 144b faisant saillie vers le levier de réglage à l'intérieur de l'échancrure 144a formée à l'extrémité correspondante de l'entretoise.

Bien entendu, les modes de réalisation décrits précédemment peuvent subir différentes modifications sans sortir du cadre de l'invention. En particulier, l'invention s'applique également à un frein à tambour à réglage automatique dans lequel le cliquet contrôlant le pivotement du levier de réglage est remplacé par tout autre système remplissant la fonction d'un embrayage unidirectionnel. Par ailleurs, au lieu d'être monté sur l'entretoise, le bilame portant la cale diminuant le jeu fonctionnel à température ambiante peut être fixé sur le levier de réglage et venir se placer contre la surface de butée formée sur celui-ci.

## Revendications

1. Frein à tambour à réglage automatique comportant une plaque support (10) sur laquelle sont montés coulissants deux segments (12, 14) comprenant des éléments de friction (16, 18) susceptibles d'être amenés en engagement de friction contre un tambour tournant (20) par un moteur de frein (22) interposé entre deux extrémités adjacentes des segments, un levier de réglage (30, 130) dont une extrémité est articulée sur ladite extrémité d'un premier des segments (12), une entretoise (44, 144) interposée entre les segments à proximité du moteur de frein, un moyen élastique (26) sollicitant les extrémités des segments vers l'entretoise, de façon à amener le levier de réglage en appui sur cette dernière lorsque le moteur de frein n'est pas actionné, pour définir une distance d'écartement au repos entre lesdites extrémités des segments, un moyen d'embrayage unidirectionnel (34) monté sur le premier segment et en prise avec l'autre extrémité du levier de réglage, de façon à autoriser seulement une rotation de ce dernier dans un sens tendant à accroître cette distance d'écartement au repos, l'entretoise (44, 144) et le levier de réglage 30, 130 portant deux surfaces en vis-à-vis (48, 50 ; 148, 150) séparées par un espace définissant un jeu fonctionnel lorsque le moteur de frein n'est pas actionné, ces surfaces étant disposées de façon à pouvoir venir en appui l'une sur l'autre pour commander la rotation du levier de réglage dans ledit sens lorsque le moteur est actionné, caractérisé en ce qu'une cale mobile (56; 154) portée par un organe (52, 152) sensible à la température est placée dans ledit espace pour donner au jeu fonctionnel une valeur réduite (J') lorsque la température est inférieure à un seuil de température donné, ledit organe sensible à la température déplaçant la cale mobile hors dudit espace lorsque la température est supérieure à ce seuil pour donner au jeu fonctionnel une valeur maximum (J).

2. Frein à tambour selon la revendication 1, caractérisé en ce que ledit organe sensible à la température est un bilame (52, 152).

3. Frein à tambour selon la revendication 2, caractérisé en ce que le bilame (52, 152) est fixé sur l'entretoise (44 ; 144) par une première extrémité et porte la cale (56, 154) à son autre extrémité.

4. Frein à tambour selon l'une quelconque des revendications 1 à 3, caractérisé en ce que ladite cale mobile (56) a une épaisseur uniforme, de sorte que ladite valeur réduite (J') du jeu est constante lorsque cette cale est placée dans ledit espace.

5. Frein à tambour selon l'une quelconque des revendications 1 à 3, caractérisé en ce que ladite cale mobile (154) a une épaisseur variable, de sorte que ladite valeur réduite (J') du jeu augmente avec la température lorsque cette cale est placée dans ledit espace.

6. Frein à tambour selon la revendication 5, caractérisé en ce que l'épaisseur de la cale mobile (154) est définie entre deux faces planes sécantes, de sorte que la valeur réduite (J') du jeu augmente progressivement avec la température, lorsque celle-ci est supérieure audit seuil.

## Patentansprüche

1. Trommelbremse mit selbsttätiger Nachstellung, mit einer Trägerplatte (10), an der zwei Segmente (12, 14) mit Reibbelägen (16, 18) gleitend gelagert sind, die durch einen zwischen benachbarten Enden der Segmente angeordneten Bremsmotor (22) in Reibanlage mit einer umlaufenden Trommel (20) bewegbar sind, einem Steuerhebel (30, 130), der mit einem Ende an dem besagten Ende eines ersten Segmentes (12) angelenkt ist, einer Strebe (44, 144), die zwischen den Segmenten in Nähe des Bremsmotors angeordnet ist, einem ersten elastischen Mittel (26), das die Enden der Segmente in Richtung auf die Strebe vorspannt, derart, daß der Steuerhebel gegen die letztere angedrückt wird, wenn der Bremsmotor nicht betätigt wird, um einen Ruheabstand zwischen den besagten Enden der Segmente zu definieren, einer Einrichtungskupplung (34), die an dem ersten Segment angebracht ist und mit dem anderen Ende des Steuerhebels in Eingriff steht, derart, daß eine Drehbewegung des letzteren nur in Richtung einer Vergrößerung des Ruheabstandes möglich ist, wobei die Strebe (44, 144) und der Steuerhebel (30, 130) zwei einander zugewandte Flächen (48, 50; 148, 150) aufweisen, die durch einen Abstand getrennt sind, welcher ein Spiel definiert, wenn der Bremsmotor nicht betätigt wird, wobei diese Flächen so angeordnet sind, daß sie sich aneinander anlegen können, um die Drehbewegung des Steuerhebels in der besagten Richtung zu steuern, wenn der Motor betätigt wird, dadurch gekennzeichnet, daß ein bewegliches Einlageteil (56; 154), das von einem temperaturempfindlichen Element (52, 152) getragen wird, in dem Zwischenraum angeordnet ist, um dem Spiel einen verringerten Wert (J') zu verleihen, wenn die Temperatur kleiner als eine vorgegebene Temperaturschwelle ist, wobei das temperaturempfindliche Element das bewegliche Einlageteil aus dem Zwischenraum verschiebt, wenn die Temperatur größer als die Temperaturschwelle ist, um dem Spiel einen maximalen Wert (J) zu verleihen.

2. Trommelbremse nach Anspruch 1, dadurch gekennzeichnet, daß das temperaturempfindliche Element ein Bimetall (52, 152) ist.

3. Trommelbremse nach Anspruch 2, dadurch gekennzeichnet, daß das Bimetall (52, 152) mit einem ersten Ende an der Strebe (44; 144) befestigt ist und an seinem anderen Ende das Einlageteil (56, 154) trägt.

4. Trommelbremse nach einem der Ansprüche 1 bis 3, dadurch gekennzeichnet, daß das bewegliche Einlageteil (56) eine gleichförmige Dicke hat, derart, daß der verringerte Wert (J') des Spiels konstant ist, wenn das Einlageteil in den Zwischenraum eingesetzt ist.

5. Trommelbremse nach einem der Ansprüche 1 bis 3, dadurch gekennzeichnet, daß das bewegliche Einlageteil (154) eine veränderliche Dicke hat, derart, daß der verringerte Wert (J') des Spiels mit der Temperatur zunimmt, wenn das Einlageteil in den Zwischenraum eingesetzt ist.

6. Trommelbremse nach Anspruch 5, dadurch gekennzeichnet, daß die Dicke des beweglichen Einlageteils (154) zwischen zwei ebenen Sekantenflächen gebildet ist, derart, daß der verringerte Wert (J') des Spiels mit der Temperatur zunehmend größer wird, wenn diese größer als die Temperaturschwelle ist.

## Claims

1. Drum brake with automatic adjustment having a backplate (10) on which two brake shoes (12, 14) are slideably mounted, comprising friction linings (16, 18) capable of being brought into friction engagement with a rotating drum (20) by a brake motor (22) inserted between two adjacent ends of the brake shoes, an adjsuting lever (30, 130) one end of which is hinged on the said end of a first of the brake shoes (12), a spacer (44, 144) inserted between the brake shoes near the brake motor, a resilient means (26) acting on the ends of the brake shoes towards the spacer so as to bring the adjusting lever to rest against the latter when the brake motor is not actuated, to define a distance apart between the said ends of the brake shoes in the rest position, a undirectional means of engagement (34) mounted on the first brake shoe and coupled to the other end of the adjusting lever, so as to permit a rotation of the latter only in a direction tending to increase this distance apart in the rest position, the spacer (44, 144) and the adjusting lever (44, 144) having two surfaces opposite one another (48, 50; 148, 150) separated by a space defining an operating clearance when the brake motor is not actuated, these surfaces being arranged so as to be able to come to rest one against the other to control the rotation of the adjusting lever in the said direction when the motor is actuated, characterized in that a moving lug (56; 154) carried by a member (52, 152) sensitive to temperature is placed in the said space to give a reduced value (J') to the operating clearance when the temperature is less than a given temperature threshold, the said member sensitive to temperature moving away the moving lug out of the said space when the temperature is more than this threshold, to give a maximum value (J) to the operating clearance.

2. Drum brake according to Claim 1, characterized in that the said member sensitive to temperature is a bimetal strip (52, 152).

3. Drum brake according to Claim 2, characterized in that the bimetal strip (52, 152) is fixed on the spacer (44; 144) by a first end and has the lug (56, 154) at its other end.

4. Drum brake according to any one of Claims 1 to 3, characterized in that the said moving lug (56) has a uniform thickness such that the said reduced value (J') of the clearance is constant when this lug is placed in the said space.

5. Drum brake according to any one of Claims 1 to 3, characterized in that the said moving lug (154) has a varing thickness, such that the said reduced value (J') of the clearance increases with the temperature when this lug is placed in the said space.

6. Drum brake according to Claim 5, characterized in that the thickness of the moving lug (154) is defined between two flat intersecting faces, such that the reduced value (J') of the clearance increases progressively with the temperature, when this is above the said threshold.

## FIG. 1

FIG. 2

FIG. 3

FIG. 4